# EUROPEAN PATENT SPECIFICATION

(11) **EP 0 694 144 B1**
(45) Date of publication and mention of the grant of the patent: **24.06.1998**
(21) Application number: 94913833.3
(22) Date of filing: 15.04.1994
(51) Int. Cl.: F17D 3/12, C10J 1/28

(54) **METHOD AND MEANS FOR ADDITION OF ODOUR COMPONENT TO CONSUMER GAS**
METHODE ZUR ZUFÜGUNG EINES GERUCHSSTOFFES AN HEIZGAS
PROCEDE ET MOYEN POUR AJOUTER UN COMPOSANT ODORANT A DU GAZ DOMESTIQUE

(30) Priority: 16.04.1993 NO 931405
(43) Date of publication of application: 31.01.1996
(73) Proprietor: NORSK HYDRO ASA, 0240 Oslo (NO)
(72) Inventor: NILSEN, Torbjorn, Aarnes, N-3960 Stathelle (NO)
(74) Representative: Bleukx, Luc
(86) International application number: NO9400074
(87) International publication number: WO9424480

(56) References cited:
- US-A- 2 979 389
- US-A- 4 007 755

## Description

The present invention relates to a method for addition of odour component to a gas, comprising addition of the odour component to the main gasline for this consumer gas. The invention also comprises means for carrying out the method.

Supply of gas to place of consumption is for several purposes made by means of a gasline system and one should then be able to register possible leakages to the surroundings. One way of securing such undesired leakage of gas is to add an odour or aroma component to the gas. In several cases it is desired to add the odour component to the gas at its production site. In these cases one desires to add the odour component into the gasline system.

Examples of gases for which the present method can be applied are oxygen for instance to welding, burning and heat treatment, and gases for packaging of foodstuff.

There exist several odour/aroma components which can be applicable for the purpose, some of these might be toxic and it is then essential that the aroma component is added in correct amounts such that during gas leakage the concentration of odour component does not become too high. It has further been a problem to attain secure handling and storage of toxic odour components. Some odour components can also result in undesired condensation, corrosion, etching etc. Dimethylsulphide (DMS) is one example of such an odour component recommended for oxygen gasline system. According to Rules for Law for working environment, "Tilsetting av luktestoff til oksygen ved sveising, brenning og varmebehandling.", written and published by the Norwegian Directorate for inspection of working conditions, December 7, 1979., DMS shall be added to the oxygen pipeline system in amounts of 10-30 mg/Nm³.

According to known technique described in the above instructions of 7 December 1979, liquid DMS is pumped from a tank by means of dosage pump. DMS is added to the oxygen through an evaporator which consists of a sintered metal body moistened by DMS, said body is placed in the gas stream. The temperature of the oxygen should be kept at 10-20°C ahead of the injection zone in order to prevent condensation of DMS. This technique has several disadvantages, especially with regard to precise dosages, security and operation. The dosage pump is accordingly representing a problem. Too much DMS in the oxygen makes the gas explosive.

Treatment of gas systems and apparatus for injecting treating agents in the form of a vapour or mist into high pressure gas systems are previously known from US-patent no. 2.979.389. According to US-2.979.389 pumps and valve arrangements are to be used for addition of treating agents to gasline systems. Means like pumps and valve arrangements, do however, involve costs and risk for operational stops and leakage.

From US-patent no. 4.007.755 a system for injecting a predetermined amount of additive fluid into a main stream of fluid which controls the amount of additive injected by timing circuit is known. This system also discloses use of pumps and valves which as above mentioned are disadvantageous. Furthermore, US-4.007.755 relates to fluid systems, while present invention relates to gas systems.

The object of the present invention was to arrive at an improved method of supplying the odour component into the gasline system of the consumer gas and that this method should not have the disadvantages mentioned above.

A further object was to arrive at means which operationally were simpler and more secure than those means applied today.

During the development of the new method the inventor found that several of the problems related to the known method were connected to application of liquid odour component. Gasification of the odour component prior to injection into the gasline system was investigated, but was found to imply that several of the problems of the known method still would remain. It was then found that by diluting the odour component with an inert carrier gas one could easier secure precise dosage of the odour component. If one in addition let the odour component evaporate into the carrier gas, it would be possible to avoid pumping of liquid odour component. This would simplify the means and apparatus to be used and in addition one would avoid the problems which could arise in the pump, for instance due to its lubricating oil.

By leading the carrier gas directly into a container with liquid odour component at a predetermined temperature one could obtain a mixture of gases having desired concentration of the odour component. Precise dosage of the odour component and thereby the prescribed concentration in the consumer gas could be secured during application of conventional apparatus components. It was further found that the addition of odour component could be secured if the pressure in the gasline system for the consumer gas and in the line for the mixture of carrier gas-odour component were measured. The pressure in the latter line should always be largest and it was secured closure of supply of odour component regulated by a predetermined pressure difference AP.

The special features of the invention and its scope are as defined in the attached claims.

The invention will now be further explained in connection with the description of the means for performing the method.

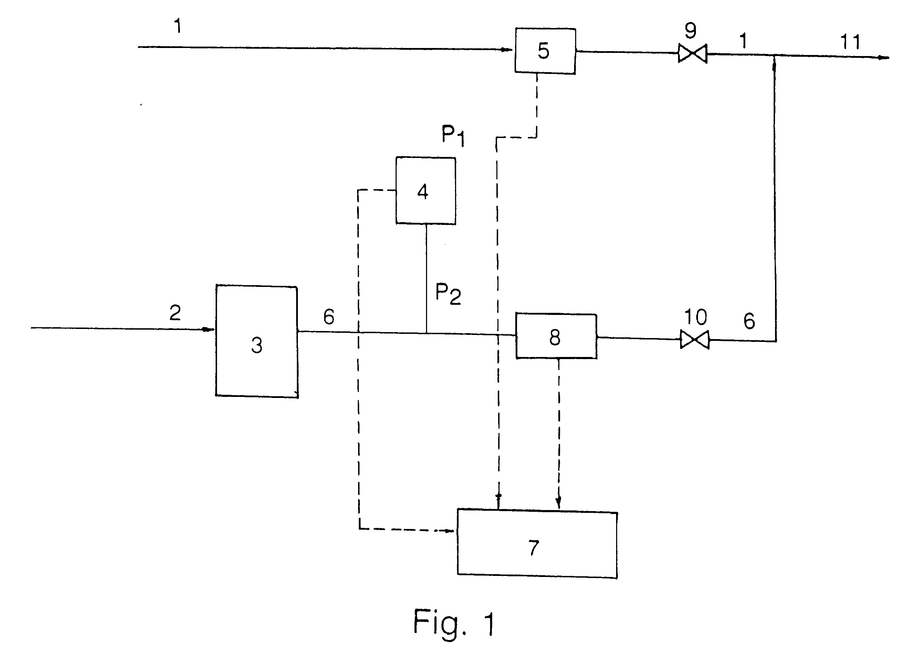

Fig. 1 shows means according to the invention.

Gas from a storage tank (not shown) is supplied to the gasline system for the consumer gas, for instance O₂, through line 1. The amount of this gas is registered by a flowmeter 5 and the pressure in line 1 is registered by a DP-cell which also measures the pressure in line 6 through which a mixture of odour component and inert carrier gas is flowing. The respective pressures P₁ and P₂ and P₂ - P₁ = ΔP are registered and shown in the registration/steering unit 7. An alarm (not shown) will start at a predetermined AP and thereby stop the supply of odour component to line 1. The mixed gas can for instance flow through line 6 when 1.5 bar ≤ ΔP ≤ 2.5 bar. The inert carrier gas can be argon or helium and in certain cases nitrogen and is supplied through line 2. The carrier gas is mixed with a gaseous odour component from the container 3. This is preferably done by letting the carrier gas in the container 3 be saturated with the gaseous odour component which at least is present in the upper part of the container 3. In the lower part of container 3 the odour component might be present in liquid form. The amount of the mixture of odour component and carrier gas in line 6 is measured by means of flowmeter 8 and this measurement is monitored by the registration/steering unit 7. The amount which leaves through line 6 can thereby be regulated as the unit 8 also comprises a control unit. The mixture of carrier gas-odour component is conducted through line 6 and fed directly into line 1 and thereby one obtains rapid and complete mixture of the odour component in the consumer gas which thereupon can be conducted into the consumer line through line 11. Check valves can be placed both in lines 1 and 6.

By the present invention one has obtained several advantages and simplifications relative to known technique. The odour component can be injected into the consumer gas precisely and in a secure way. Even though the odour component which at normal pressure and temperature is liquid one does not have any problem with condensation at the injection site in the gasline system for the consumer gas. Application of pumps which increases the cost of the apparatus is avoided and the risk for operational stops and leakage of odour component which might be toxic and etching is reduced. Applications of such odour components are possible by using the present invention because the container for the odour component is connected directly to the inert gasline and the line for mixed gas. The operator of the apparatus will thereby not be exposed to extra danger such as loss of liquid and leakages of such liquid.

By the present invention one also avoids the risks experienced today with regard to explosion/fire which application of liquid DMS now results in.

The problems which the above Rules § 10 describe with regard to using lubricating oils reacting with oxygen for the dosing pump, do not exist in connection with the present means which does not comprise pumping of liquid and aggressive odour components.

## Claims

1. Method for addition of odour component to gas line system for consumer gas, comprising addition of odour component in gaseous form in a carrier gas,
**characterized in** that
the carrier gas is saturated with odour component by conducting the carrier gas through a container with liquid odour component and that the amount of consumer gas is monitored by a flowmeter which gives signal to a registration/steering unit which regulates the amount of mixed gas, carrier gas-odour component, and that the pressures in the gas lines for consumer gas and mixed gas are monitored and that the mixed gas is supplied to the gas line for consumer gas when the pressure difference between the two lines is within a predetermined range and that registration of the pressure difference also gives signal to the registration/steering unit.

2. Method according to claim 1,
**characterized in** that
the mixed gas is supplied to the line for consumer gas when the pressure difference ΔP between the two lines is in the range 1.5 bar ≤ ΔP ≤ 2.5 bar.

3. Arrangement for addition of odour component in gaseous form in a carrier gas to a gas line system for consumer gas, comprising supply lines with flowmeters connected to a registration/steering unit, for consumer gas and carrier gas, and a container for odour component,
**characterized in** that a gas line (6) from a container (3) wherein the carrier gas is saturated with the odour component by conducting the carrier gas through the container (3) with liquid odour component, through which is transported a mixed gas, i.e. carrier gas - odour component, is connected to a differential pressure cell (4) which also is in connection with consumer gas line (1), and that the pressure in the gas lines (1, 6) and the pressure difference ΔP between lines (6) and (1) is registered by the cell (4), and that line (1) comprises a flowmeter (5) and line (6) comprises a flowmeter (8) respectively monitoring the amounts of consumer gas and mixed gas, which give signals to a registration/steering unit (7) connected to the cell (4) also giving signals to the unit (7), and that the amount of mixed gas conducted into line (1) at a place subsequent to the flowmeter (5), is regulated according to the measured values from the cell (4) and flowmeters (5, 8) to a pressure difference between the two lines (1, 6) being within a predetermined range.

4. Arrangement according to claim 3,
**characterized in** that
the unit (7) comprises an alarm which starts when supply of consumer gas is stopped when ΔP is different from a predetermined value.

5. Arrangement according to claim 3,
**characterized in** that
in each line (1) and (6) there are check valves (9) and (10) ahead of the connection point for line (6) to line (1).

## Patentansprüche

1. Verfahren für die Zufuhr einer Geruchskomponente in ein Gasleitungssystem für ein Verbrauchsgas, welches den Zusatz einer Geruchskomponente im gasförmigen Zustand in ein Trägergas beinhaltet, dadurch gekennzeichnet, daß das Trägergas mit einer Geruchskomponente dadurch gesättigt wird, daß das Trägergas durch einen Behälter mit flüssiger Geruchskomponente hindurch geleitet wird und daß die Menge des Verbrauchsgases mit Hilfe eines Durchflußmessers überwacht wird welcher ein Signal an die Aufzeichnungs-/Steuerungseinheit abgibt welche ihrerseits die Menge des Gasgemisches aus Trägergas und Geruchskomponente regelt, und daß die Druckwerte in den Gasleitungen für Verbrauchsgas und für Gasgemisch überwacht werden und daß das Gasgemisch in die Gasleitung für das Verbrauchsgas eingeführt wird wenn der Druckunterschied zwischen den beiden Leitungen innerhalb eines vorherbestimmten Bereiches liegt, und daß die Aufzeichnung des Druckunterschiedes ebenfalls ein Signal an die Aufkeichnungs-/Steuerungseinheit abgibt.

2. Verfahren gemäß Anspruch 1, dadurch gekennzeichnet, daß das Gasgemisch der Leitung für das Verbrauchsgas dann zugeführt wird wenn der Druckunterschied ΔP zwischen den beiden Leitungen in dem Bereich 1,5 bar ≤ ΔP ≤ 2,5 bar liegt.

3. Anordnung für die Zufuhr einer Geruchskomponente im gasförmigen Zustand in einem Trägergas hin zu einem Gasleitungssystem für Verbrauchsgas, welche an eine Aufzeichnungs-/Steuerungseinheit angeschlossene und mit Durchflußmessern ausgestattete Zuführleitungen für Verbrauchsgas und für Trägergas aufweist sowie einen Behälter für Geruchskomponente, dadurch gekennzeichnet, daß eine Gasleitung (6), welche aus einem Behälter (3) kommt, worin das Trägergas dadurch mit der Geruchskomponente gesättigt wird indem das Trägergas durch den Behälter (3) mit flüssiger Geruchskomponente hindurch geführt wird, und welche für den Transport eines Gasgemisches, d.h. Trägergas und Geruchskomponente, dient, mit einer Differenzdruckzelle (4) verbunden ist welche ebenfalls mit der Verbrauchsgasleitung (1) in Verbindung steht, und daß der Druck in den Gasleitungen (1, 6) sowie der Druckunterschied ΔP zwischen den Leitungen (6) und (1) von der Zelle (4) aufgezeichnet wird, und daß die Leitung (1) einen Durchflußmesser (5) und die Leitung (6) einen Durchflußmesser (8) aufweisen welche die jeweiligen Mengen an Verbrauchsgas und an Gasgemisch überwachen und welche Signale an eine Aufzeichnungs-/Steuerungseinheit (7) abgeben, welche mit der Zelle (4) verbunden ist die ebenfalls Signale an die Einheit (7) abgibt, und daß die an einer Stelle hinter dem Durchflußmesser (5) der Leitung (1) zugeführte Menge des Gasgemisches entsprechend den von der Zelle (4) und den Durchflußmessern (5, 8) gemessenen Werten geregelt wird auf daß ein Druckunterschied zwischen den beiden Leitungen (1, 6) aufrechterhalten wird der innerhalb eines bestimmten Bereiches liegt.

4. Anordnung gemäß Anspruch 3, dadurch gekennzeichnet, daß die Einheit (7) ein Alarmgerät aufweist welches einsetzt wenn die Zufuhr von Verbrauchsgas unterbrochen wird falls der Druckunterschied ΔP von einem vorherbestimmten Wert abweicht.

5. Anordnung gemäß Anspruch 3, dadurch gekennzeichnet, daß in jeder der Leitungen (1) und (6) Kontrollventile (9) und (10) angeordnet sind, die sich stromabwärts in Bezug auf die Verbindungsstelle der Leitung (6) mit der Leitung (1) befinden.

## Revendications

1. Procédé pour l'addition de composant odorant au système de canalisation de gaz transportant du gaz de consommation, procédé comprenant l'addition de composant odorant sous forme gazeuse dans un gaz porteur,
caractérisé en ce que le gaz porteur est saturé avec le composant odorant en conduisant le gaz porteur à travers un conteneur avec un composant odorant liquide, et en ce que la quantité de gaz de consommation est surveillée au moyen d'un débitmètre qui transmet un signal à l'unité d'enregistrement et de régulation qui règle la quantité du mélange de gaz, gaz porteur - composant odorant, et en ce que les pressions dans les conduites de gaz pour gaz de consommation et pour mélange de gaz sont surveillées et en ce que le mélange de gaz est introduit dans la conduite de gaz pour gaz de consommation lorsque la différence de pression entre les deux conduites se situe dans une fourchette prédéterminée et que l'enregistrement de la différence de pression transmet également un signal à l'unité d'enregistrement et de régulation.

2. Procédé suivant la revendication 1,
caractérisé en ce que le mélange de gaz est introduit dans la conduite pour le gaz de consommation lorsque la différence de pression ΔP entre les deux conduites est de l'ordre de 1,5 bar ≤ ΔP ≤ 2,5 bar.

3. Dispositif pour l'addition d'un composant odorant sous forme gazeuse avec un gaz porteur dans un système de canalisation de gaz transportant du gaz de consommation, dispositif comprenant des conduites d'amenée avec des débitmétres connectés à une unité d'enregistrement et de régulation pour le gaz de consommation et pour le gaz porteur ainsi qu'un conteneur pour le composant odorant,
caractérisé en ce qu'une conduite de gaz (6), qui part d'un conteneur (3), dans lequel le gaz porteur est saturé avec le composant odorant grâce au passage du gaz porteur travers le conteneur (3) renfermant le composant odorant liquide, et à travers laquelle est transporté un mélange de gaz, c.-à-d. gaz porteur - composant odorant, est connectée à un capteur de différentiel de pression (4) qui est lui aussi en connexion avec la conduite de gaz de consommation (1), et en ce que la pression dans la conduite de gaz (1, 6) et la différence de pression ΔP entre les conduites (6) et (1) est enregistrée par le capteur (4), et en ce que la conduite (1) comporte un débitmètre (5) et la conduite (6) comporte un débitmètre (8) contrôlant respectivement les quantités de gaz de consommation et de mélange de gaz, pour donner des signaux à une unité d'enregistrement et de régulation (7) connectée au capteur (4) qui transmet lui aussi des signaux à cette unité (7), et en ce que la quantité de mélange de gaz introduite dans la conduite (1) à un endroit en aval du débitmètre (5) est réglée en fonction des valeurs mesurées par le capteur (4) et les débitmétres (5, 8) par rapport à une différence de pression entre les deux conduites (1, 6) qui se situe dans une fourchette prédéterminée.

4. Dispositif suivant la revendication 3,
caractérisé en ce que l'unité (7) comporte une alarme qui se déclenche quand l'approvisionnement en gaz de consommation est arrêté lorsque la valeur de ΔP est différente d'une valeur prédéterminée.

5. Dispositif suivant la revendication 3,
caractérisé en ce que des soupapes de contrôle (9) et (10) se trouvent dans chacune des conduites (1) et (6) en amont du point de connexion de la conduite (6) avec la conduite (1).
